# EUROPEAN PATENT APPLICATION

(11) **EP 4 375 239 A1**
(43) Date of publication of application: **29.05.2024**
(21) Application number: 22886997.0
(22) Date of filing: 25.10.2022
(51) Int. Cl.: C01G 25/00

(54) **ZIRCONIUM HYDROXIDE POWDER**

(30) Priority: 01.11.2021 JP 2021178723
(71) Applicant: Daiichi Kigenso Kagaku Kogyo Co., Ltd., Osaka-shi, Osaka 541-0041 (JP)
(72) Inventor: NIWA,Tadahiro, Osaka-shi, Osaka 559-0025 (JP)
(74) Representative: Cabinet Beau de Loménie
(86) International application number: PCT/JP2022/039690
(87) International publication number: WO 2023/074671

(57) **Abstract**

A zirconium hydroxide powder, wherein in a pore diameter distribution determined by a mercury intrusion method, a pore diameter D₅₀ in a range of 10 nm or more and 6000 nm or less is 50 nm or more and 1000 nm or less.

## Description

### TECHNICAL FIELD

The present invention relates to a zirconium hydroxide powder.

### BACKGROUND ART

A zirconium hydroxide powder has attracted attention as a material for improving the characteristics of a lithium ion secondary battery. Specific examples of the use include complexing with an electrode active material for the purpose of stabilizing the structure of the electrode active material, and use as an inorganic filler in a separator. In particular, it is known that the structure stabilization of the electrode active material is very effective in considering an increase in the capacity of the lithium ion secondary battery.

Patent Document 1 discloses amorphous zirconium hydroxide having a surface area of at least 300 m²/g, a total pore volume of at least 0.70 cm³/g, and an average pore size of 5 nm to 15 nm (see claim 1).

Patent Document 2 discloses zirconium oxide hydrate particles represented by the general formula ZrO₂·nH₂O, in which an average pore diameter of the particles determined by a nitrogen gas adsorption method is 1.5 nm or more and 1.75 nm or less, n in the general formula is a number exceeding 2.5, and the n is a numerical value measured after the particles are dispersed in water, filtered, and then dried at 60°C for 6 hours in air (see claim 1).

### PRIOR ART DOCUMENT

### PATENT DOCUMENTS

Patent Document 1: JP-B-5149814
Patent Document 2: JP-A-2009-274897

### SUMMARY OF THE INVENTION

### PROBLEMS TO BE SOLVED BY THE INVENTION

In general, in applications in which a zirconium hydroxide powder is complexed with other materials as in the above-described applications, it is considered important how the zirconium hydroxide powder and the other materials can be uniformly complexed.

As a result of intensive studies, the present inventor has come to think that a more uniform composite can be obtained if a zirconium hydroxide powder that can be easily crushed can be provided.

The present invention has been made in view of the above-described problems, and an object of the present invention is to provide a zirconium hydroxide powder that can be easily crushed.

### MEANS FOR SOLVING THE PROBLEMS

The present inventor has diligently studied a zirconium hydroxide powder. As a result, the present inventor surprisingly found that a zirconium hydroxide powder having the following configuration can be easily crushed, and completed the present invention.

That is, a zirconium hydroxide powder according to the present invention is a zirconium hydroxide powder, in which in a pore diameter distribution determined by a mercury intrusion method, a pore diameter D₅₀ in a range of 10 nm or more and 6000 nm or less is 50 nm or more and 1000 nm or less.

Pores having a pore diameter of 50 nm or more and 1000 nm or less correspond to macropores in secondary particles of the zirconium hydroxide powder. The presence of the macropores serves as a starting point of breakage of bonding (necking) between the secondary particles.

According to the above configuration, the pore diameter D₅₀ in the range of 10 nm or more and 6000 nm or less is 50 nm or more and 1000 nm or less, and the zirconium hydroxide powder has the macropores serving as a starting point of breakage of necking between the secondary particles, so that an aggregate structure can be said to be fragile. Therefore, the zirconium hydroxide powder can be easily crushed without using a strong crushing method.

Here, amorphous zirconium hydroxide of Patent Document 1 has an average pore size of 5 nm to 15 nm, and voids are mainly fine pores of 15 nm or less. Zirconium oxide hydrate particles of Patent Document 2 have an average pore diameter of 1.5 nm or more and 1.75 nm or less, and voids are mainly fine pores of 1.75 nm or less. The fact that the pores formed by the aggregate structure are fine suggests that a contact area between primary particles is large, and it is hard to say that the zirconium hydroxide disclosed in Patent Documents 1 and 2 has strong agglomeration and can be easily crushed. Therefore, in order to pulverize these zirconium hydroxides, a stronger crushing method such as wet grinding is required.

Conventionally, as a general method for obtaining a zirconium hydroxide powder, a method for obtaining a zirconium hydroxide powder from a sol has been proposed (see, for example, JP-B-3008517). However, when the method is used, the specific gravity of the obtained zirconium hydroxide increases, and a dense structure having few voids serving as starting points of agglomeration and crushing is obtained. Therefore, in order to pulverize the zirconium hydroxide, a stronger crushing method such as wet grinding is required.

As described above, in the conventional technique, setting the pore diameter D₅₀ in the range of 10 nm or more and 6000 nm or less within the range of 50 nm or more and 1000 nm or less is neither described nor suggested.

In the above configuration, a total pore volume in a range of 10 nm or more and 6000 nm or less determined by the mercury intrusion method is preferably 0.5 mL/g or more and 1.5 mL/g or less.

When the total pore volume is 0.5 mL/g or more, the zirconium hydroxide powder can be said to have many macropores serving as starting points of cracks. Therefore, atomization can be more easily performed.

In the above configuration, a material amount ratio of H₂O to Zr ([H₂O]/[Zr]) excluding physically adsorbed water is preferably 0.2 or more and 1.0 or less.

When the material amount ratio ([H₂O]/[Zr]) is 0.2 or more and 1.0 or less, bonding between primary particles is weak, and reaggregation after the crushing treatment hardly occurs.

In the above configuration, the zirconium hydroxide powder preferably has a bulk density of 0.05 g/cm³ or more and 1 g/cm³ or less.

When the bulk density is 1 g/cm³ or less, many voids can be said to be present in the zirconium hydroxide powder. That is, a larger number of macropores serving as starting points of cracks can be said to be provided in the zirconium hydroxide powder. Therefore, atomization can be more easily performed.

In the above configuration, when a particle diameter D₅₀ after the following crushing treatment is defined as a particle diameter D_{50-after}, and a particle diameter D₅₀ before the crushing treatment is defined as a particle diameter D_{50-before}, a particle size change rate represented by the following formula (1) is 80% or more:[Particle size change rate(%) = 100 - ([particle diameter D50-after] / [particle diameter D50-before]) × 100

### <Crushing treatment>

0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

The crushing treatment is a crushing treatment under a relatively mild condition. According to the above configuration, the particle size change rate is 80% or more by the gentle crushing treatment. That is, the particle diameter D₅₀ (particle diameter D_{50-after}) after the crushing treatment is further atomized as compared with the particle diameter D₅₀ (particle diameter D_{50-before}) before the crushing treatment. Therefore, the zirconium hydroxide powder can be said to be easily atomized.

In the above configuration, the particle diameter D_{50-before} is preferably 50 um or more and 300 um or less.

In the above configuration, the particle diameter D_{50-after} is preferably 0.05 um or more and 9 µm or less.

In the above configuration, the zirconium hydroxide powder preferably has a specific surface area of 200 m²/g or more and 450 m²/g or less.

### EFFECT OF THE INVENTION

According to the present invention, it is possible to provide a zirconium hydroxide powder that can be easily crushed.

### BRIEF DESCRIPTION OF THE DRAWINGS

Fig. 1 is a schematic view for explaining a method for producing a zirconium hydroxide powder according to the present embodiment.
Fig. 2 shows pore distributions of zirconium hydroxide powders of Example 2, Example 7, and Comparative Example 2.
Fig. 3 shows particle diameter distributions before and after crushing of a zirconium hydroxide powder of Example 1.
Fig. 4 shows particle diameter distributions before and after crushing of a zirconium hydroxide powder of Example 5.
Fig. 5 shows particle diameter distributions before and after crushing of a zirconium hydroxide powder of Comparative Example 1.
Fig. 6 is a SEM image of a zirconium hydroxide powder obtained in Example 1.
Fig. 7 is a SEM image of a zirconium hydroxide powder obtained in Example 6.
Fig. 8 is a SEM image of a zirconium hydroxide powder obtained in Comparative Example 1.

### MODE FOR CARRYING OUT THE INVENTION

Hereinafter, embodiments of the present invention will be described. However, the present invention is not limited only to these embodiments. In the present description, zirconium hydroxide is a common zirconium hydroxide and contains 10% by mass or less of impurity metal compounds including hafnia.

### [Zirconium hydroxide powder]

A zirconium hydroxide powder according to the present embodiment, wherein in a pore diameter distribution determined by a mercury intrusion method, a pore diameter D₅₀ in a range of 10 nm or more and 6000 nm or less is 50 nm or more and 1000 nm or less. The pore diameter D₅₀ in the range of 10 nm or more and 6000 nm or less is 50 nm or more and 1000 nm or less, and the zirconium hydroxide powder has macropores serving as a starting point of breakage of necking between secondary particles, so that an aggregate structure can be said to be fragile. Therefore, the zirconium hydroxide powder can be easily crushed without using a strong crushing method.

The pore diameter D₅₀ is preferably 75 nm or more, and more preferably 100 nm or more. The pore diameter D₅₀ is preferably 800 nm or less, and more preferably 600 nm or less.

The zirconium hydroxide powder preferably has a total pore volume in a range of 10 nm or more and 6000 nm or less determined by a mercury intrusion method of 0.5 mL/g or more and 1.5 mL/g or less. When the total pore volume is 0.5 mL/g or more, the zirconium hydroxide powder can be said to have many macropores serving as starting points of cracks. Therefore, atomization can be more easily performed.

The total pore volume is more preferably 0.6 mL/g or more, and still more preferably 0.7 mL/g or more. The total pore volume is preferably as large as possible, and is, for example, 1.4 mL/g or less or 1.3 mL/g or less, or the like.

The pore diameter D₅₀ and the total pore volume refer to values obtained by the method described in Examples.

The zirconium hydroxide powder preferably has a bulk density of 0.05 g/cm³ or more and 1 g/cm³ or less. When the bulk density is 1 g/cm³ or less, many voids can be said to be present in the zirconium hydroxide powder. That is, a larger number of macropores serving as starting points of cracks can be said to be provided in the zirconium hydroxide powder. Therefore, atomization can be more easily performed.

The bulk density is more preferably 0.80 g/cm³ or less, and still more preferably 0.60 g/cm³ or less. The bulk density is preferably as small as possible, and is, for example, 0.10 g/cm³ or more or 0.20 g/cm³ or more, or the like.

The bulk density refers to a value obtained by the method described in Examples.

In the zirconium hydroxide powder, it is preferable that when a particle diameter D₅₀ after the following crushing treatment is defined as a particle diameter D_{50-after}, and a particle diameter D₅₀ before the crushing treatment is defined as a particle diameter D_{50-before}, a particle size change rate represented by the following formula (1) is 80% or more: [Particle size change rate (%)] = 100 - ([particle diameter D50-after] / [particle diameter D50-before]) × 100

### <Crushing treatment>

0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

The crushing treatment is a crushing treatment under a relatively mild condition. When the particle size change rate is 80% or more, the zirconium hydroxide powder is greatly atomized by the gentle crushing treatment. Therefore, the zirconium hydroxide powder can be said to be easily atomized.

The particle size change rate is more preferably 83% or more, and still more preferably 86% or more. The particle size change rate is preferably as large as possible, and is, for example, 99.5% or less or 99% or less, or the like.

The zirconium hydroxide powder preferably has a particle diameter D₅₀ (particle diameter D_{50-before}) of 50 um or more and 300 um or less before the crushing treatment. The particle diameter D_{50-before} is more preferably 55 um or more, and still more preferably 60 µm or more. The particle diameter D_{50-before} is more preferably 275 um or less, and still more preferably 250 um or less.

The zirconium hydroxide powder preferably has a particle diameter D₅₀ (particle diameter D_{50-after}) of 0.05 µm or more and 9 µm or less after the crushing treatment. The particle diameter D_{50-after} is more preferably 0.07 µm or more, and still more preferably 0.1 um or more. The particle diameter D_{50-after} is more preferably 7 µm or less, and still more preferably 5 µm or less.

The zirconium hydroxide powder preferably has a particle diameter D₁₀ (particle diameter D_{10-before}) of 0.5 um or more and 50 µm or less before the crushing treatment. The particle diameter D_{10-before} is more preferably 1 um or more, and still more preferably 2 µm or more. The particle diameter D_{10-before} is more preferably 40 um or less, and still more preferably 30 um or less.

The zirconium hydroxide powder preferably has a particle diameter D₁₀ (particle diameter D_{10-after}) of 0.1 µm or more and 2.5 µm or less after the crushing treatment. The particle diameter D_{10-after} is more preferably 0.2 µm or more, and still more preferably 0.3 um or more. The particle diameter D_{10-after} is more preferably 2.0 um or less, and still more preferably 1.5 um or less.

When the particle diameter D_{10-after} is 2.5 um or less, the zirconium hydroxide powder can be said to be greatly atomized by the following crushing treatment. Therefore, the zirconium hydroxide powder can be said to be easily atomized.

### <Crushing treatment>

0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

The zirconium hydroxide powder preferably has a particle diameter D₉₀ (particle diameter D_{90-before}) of 200 um or more and 900 µm or less before the crushing treatment. The particle diameter D_{90-before} is more preferably 250 µm or more, and still more preferably 300 um or more. The particle diameter D_{90-before} is more preferably 850 um or less, and still more preferably 800 um or less.

The zirconium hydroxide powder preferably has a particle diameter D₉₀ (particle diameter D_{90-after}) of 1 um or more and 10 µm or less after the following crushing treatment. The particle diameter D_{90-after} is more preferably 2 um or more, and still more preferably 3 um or more. The particle diameter D_{90-after} is more preferably 9 um or less, and still more preferably 8 µm or less.

When the particle diameter D_{90-after} is 10 um or less, the following crushing treatment can be said to cause no coarse particles to remain. Therefore, the zirconium hydroxide powder can be said to be easily atomized.

### <Crushing treatment>

0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

The zirconium hydroxide powder preferably has a mode diameter of 50 µm or more and 700 µm or less before the crushing treatment. The mode diameter before the crushing treatment is more preferably 70 µm or more, and still more preferably 90 µm or more. The mode diameter before the crushing treatment is more preferably 650 µm or less, and still more preferably 600 µm or less.

The zirconium hydroxide powder preferably has a mode diameter of 0.5 um or more and 6 um or less before the crushing treatment. The mode diameter after the crushing treatment is more preferably 1 um or more, and still more preferably 2 µm or more. The mode diameter before the crushing treatment is more preferably 5 µm or less, and still more preferably 4 µm or less.

When the mode diameter after the crushing treatment is 6 µm or less, the zirconium hydroxide powder can be said to be greatly atomized by the following crushing treatment. Therefore, the zirconium hydroxide powder can be said to be easily atomized.

### <Crushing treatment>

0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

The zirconium hydroxide powder preferably has an average particle diameter of 80 µm or more and 500 µm or less before the crushing treatment. The average particle diameter before the crushing treatment is more preferably 90 µm or more, and still more preferably 100 µm or more. The average particle diameter before the crushing treatment is more preferably 450 um or less, and still more preferably 400 um or less.

The zirconium hydroxide powder preferably has an average particle diameter of 0.5 um or more and 10 µm or less after the following crushing treatment. The average particle diameter after the crushing treatment is more preferably 1 um or more, and still more preferably 2 µm or more. The average particle diameter after the crushing treatment is more preferably 8 µm or less, and still more preferably 6 µm or less.

When the average particle diameter after the crushing treatment is 10 µm or less, the zirconium hydroxide powder can be said to be greatly atomized by the following crushing treatment. Therefore, the zirconium hydroxide powder can be said to be easily atomized.

### <Crushing treatment>

0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

The particle diameter D_{50-before}, the particle diameter D_{50-after}, the particle diameter D_{10-before}, the particle diameter D_{10-after}, the particle diameter D_{90-before}, the particle diameter D_{90-after}, the mode diameter before the crushing treatment, the mode diameter after the crushing treatment, the average particle diameter before the crushing treatment, and the average particle diameter after the crushing treatment refer to values obtained by the method described in Examples.

The zirconium hydroxide powder preferably has a specific surface area of 200 m²/g or more and 450 m²/g or less. The specific surface area is more preferably 220 m²/g or more, and still more preferably 250 m²/g or more. The specific surface area is preferably as large as possible, and is, for example, 400 m²/g or less or 350 m²/g or less, or the like.

The specific surface area refers to a value obtained by the method described in Examples.

Zirconium hydroxide is a compound represented by the general formula ZrO(OH)₂·nH₂O (n>0). Aqueous zirconium oxide is a compound represented by the general formula ZrO₂·nH₂O (n>0). The zirconium hydroxide powder according to the present embodiment contains both a powder of zirconium hydroxide and a powder of aqueous zirconium oxide.

n is preferably 2 or less, and more preferably 1.5 or less. When n is 2 or less, a moisture content is small, and reaggregation after the crushing treatment hardly occurs. The number of n can be adjusted by, for example, the temperature or time of a drying step.

The zirconium hydroxide powder is preferably amorphous. Whether the zirconium hydroxide powder is crystalline or amorphous is determined by powder X-ray diffraction measurement. When the zirconium hydroxide powder is crystalline, a clear diffraction peak is confirmed in a range of 2θ=28° to 31°, but when the zirconium hydroxide powder is amorphous, a peak in the range is broad, and a crystallite diameter calculated from a half width is 3 nm or less.

The zirconium hydroxide powder preferably has a material amount ratio of H₂O to Zr ([H₂O]/[Zr]) excluding physically adsorbed water of 0.2 or more and 1.0 or less.

Here, the physically adsorbed water refers to water that is released by heating at 195°C or lower. That is, H₂O excluding physically adsorbed water refers to chemically adsorbed water (crystal water).

When the material amount ratio ([H₂O]/[Zr]) is 0.2 or more and 1.0 or less, bonding between primary particles is weak, and reaggregation after the crushing treatment hardly occurs.

The material amount ratio ([H₂O]/[Zr]) is more preferably 0.3 or more, and still more preferably 0.4 or more. The material amount ratio ([H₂O]/[Zr]) is more preferably 0.9 or less, and still more preferably 0.8 or less.

The material amount ratio ([H₂O]/[Zr]) refers to a value obtained by the method described in Examples.

The use of the zirconium hydroxide powder is not particularly limited, but the zirconium hydroxide powder can be easily crushed, and therefore the zirconium hydroxide powder can be used as, for example, a battery member of a lithium ion secondary battery or the like or a raw material powder in the synthesis of a composite oxide containing Zr. When the zirconium hydroxide powder is used as a battery member of a lithium ion secondary battery or the like, the zirconium hydroxide powder can be uniformly complexed with other materials, so that improvement in performance of the member or the battery can be expected. When the zirconium hydroxide powder is used as a raw material powder in the synthesis of the composite oxide containing Zr, the sample can be adjusted to a more uniform state in the case of synthesizing the composite oxide by a method (solid phase method) using a ball mill or a mixer or the like. That is, when the zirconium hydroxide powder is used as the raw material powder in the synthesis of the composite oxide, the zirconium hydroxide powder is easily crushed to fine particles, so that the sample can be adjusted to a more uniform state.

### [Method for producing zirconium hydroxide powder]

Hereinafter, one example of a method for producing a zirconium hydroxide powder will be described. However, the method for producing a zirconium hydroxide powder of the present invention is not limited to the following examples.

The method for producing a zirconium hydroxide powder according to the present embodiment includes:
a step 1 of heating a zirconium salt solution having a Zr concentration of 0.5 M or more and 2.0 M or less to 60°C or higher and 90°C or lower;
a step 2 of heating a sulfatizing agent solution to 60°C or higher and 90°C or lower; and
a step 3 of bringing the zirconium salt solution after heating into contact with the sulfatizing agent solution after heating, and immediately charging the zirconium salt solution and the sulfatizing agent solution into an alkali solution.

Hereinafter, each of the steps will be described in detail.

### <Step 1>

In the step 1, a zirconium salt solution having a Zr concentration of 0.5 M or more and 2.0 M or less is heated to 60°C or higher and 90°C or lower.

The zirconium salt to be used for preparing the zirconium salt solution may be any one that supplies zirconium ions, and for example, zirconium oxynitrate, zirconium oxychloride, and zirconium nitrate and the like can be used. One or two or more thereof may be used. Among these, zirconium oxychloride is preferable in terms of its high productivity on an industrial scale.

The solvent to be used for forming the zirconium salt solution may be chosen according to the type, etc. of the zirconium salt. Usually, water (pure water or ion-exchanged water, the same applies hereinafter) is preferable.

As described above, the concentration of the zirconium salt solution is set to a Zr concentration of 0.5 M or more and 2.0 M or less. By setting the concentration of the zirconium salt solution to 0.5 M or more and 2.0 M or less, the production rate of basic zirconium sulfate particles (ZBS particles) produced when the zirconium salt solution is brought into contact with the sulfatizing agent solution can be slowed down, and the growth of the ZBS particles can be moderately suppressed. The Zr concentration of the zirconium salt solution is preferably 1.8 M or less, and more preferably 1.6 M or less, from the viewpoint of moderately suppressing the growth of the ZBS particles. The Zr concentration of the zirconium salt solution is preferably 0.7 M or more, and more preferably 1.0 M or more, from the viewpoint that the production of the ZBS particles is not excessively suppressed.

As described above, in the step 1, the zirconium salt solution is heated to 60°C or higher and 90°C or lower. By setting the temperature of the zirconium salt solution to 60°C or higher and 90°C or lower, the production rate of basic zirconium sulfate particles (ZBS particles) produced when the zirconium salt solution is brought into contact with the sulfatizing agent solution can be slowed down, and the growth of the ZBS particles can be moderately suppressed. The temperature of the zirconium salt solution is preferably 85°C or lower, and more preferably 80°C or lower, from the viewpoint of moderately suppressing the growth of the ZBS particles. The temperature of the zirconium salt solution is preferably 65°C or higher, and more preferably 70°C or higher, from the viewpoint that the production of the ZBS particles is not excessively suppressed.

### <Step 2>

In the step 2, the sulfatizing agent solution is heated to 60°C or higher and 90°C or lower. The step 2 may be performed in parallel with the step 1.

The sulfating agent may be any one that reacts with zirconium ions to produce a sulfate (that is, a sulfating reagent), and examples thereof include sulfuric acid, sodium sulfate, potassium sulfate, ammonium sulfate, potassium hydrogen sulfate, sodium hydrogen sulfate, potassium disulfate, sodium disulfate, and sulfur trioxide. The sulfating agent may be in any form such as a powder or a solution form, and a solution (especially, an aqueous solution) is preferable. As the solvent, the same solvent as the solvent to be used for preparing the zirconium salt solution can be used.

The acid concentration of the zirconium salt solution is preferably set to 0.1 to 2.0 N. By setting the acid concentration within the above range, the aggregation state of the particles constituting the zirconium hydroxide powder can be controlled to a suitable state. The acid concentration can be adjusted by using, for example, hydrochloric acid, nitric acid, sodium hydroxide, potassium hydroxide, sodium carbonate, or sodium hydrogen carbonate or the like.

The concentration of the sulfating agent (the sulfating agent solution) is not particularly limited, but is preferably 0.1 to 3.0 M.

As described above, in the step 2, the sulfatizing agent solution is heated to 60°C or higher and 90°C or lower. By setting the temperature of the sulfatizing agent solution to 60°C or higher and 90°C or lower, the growth rate of basic zirconium sulfate particles (ZBS particles) produced when the sulfatizing agent is brought into contact with the zirconium salt solution can be moderately suppressed. The temperature of the sulfatizing agent solution is preferably 85°C or lower, and more preferably 80°C or lower, from the viewpoint of moderately suppressing the growth of the ZBS particles. The temperature of the sulfatizing agent solution is preferably 65°C or higher, and more preferably 70°C or higher, from the viewpoint that the production reaction of the ZBS particles is not excessively suppressed. The temperature of the sulfatizing agent solution is preferably the same as the temperature of the zirconium salt solution.

The containers for preparing the zirconium salt solution and the sulfating agent solution are not particularly limited with respect to their materials as long as the containers each have a capacity large enough for sufficiently stirring the zirconium salt solution and the sulfating agent solution. However, the containers preferably have equipment capable of appropriately heating such that the temperature of each solution does not fall below 60°C. For example, it is preferable to install a heater in a tube (for example, T-shaped tube 20 to be described later) or the like for supplying each solution.

### <Step 3>

In the step 3, the zirconium salt solution after heating and the sulfating agent solution after heating are brought into contact with each other, and the zirconium salt solution and the sulfating agent solution are immediately charged into the alkaline solution.

Hereinafter, the step 3 will be described with reference to drawings.

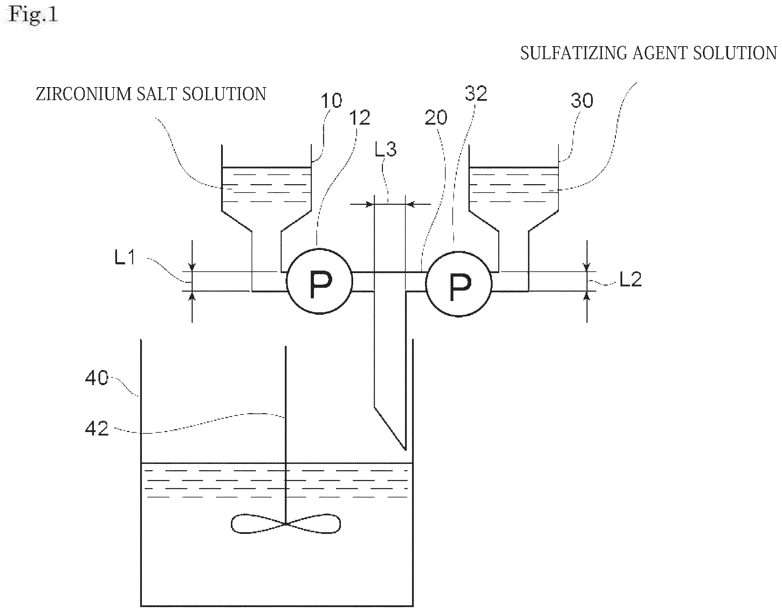

Fig. 1 is a schematic view for explaining a method for producing a zirconium hydroxide powder according to the present embodiment. As shown in Fig. 1, a container 10 is connected to one end (left side in Fig. 1) above the T-shaped tube 20 via a metering solution feeding pump 12. A container 30 is connected to the other end (the right side in Fig. 1) above a T-shaped tube 20 via a metering solution feeding pump 32. In the container 10 is stored a zirconium solution heated to 60°C or higher and 90°C or lower. In the container 30 is stored a sulfating agent solution heated to 60°C or higher and 90°C or lower.

A container 40 contains an alkaline solution and is disposed below the T-shaped tube 20. The alkali is not limited, and examples thereof include potassium hydroxide, sodium hydroxide, sodium carbonate, sodium hydrogen carbonate, ammonia, hydrazine, and ammonium hydrogen carbonate. The alkali is not particularly limited in concentration, and one diluted with water and having a concentration of 5 to 30% is usually used.

The alkali solution is preferably heated to 70°C or higher and 100°C or lower. When the temperature of the alkali solution is 70°C or higher, the formation of aggregated particles rapidly proceeds, and when the temperature of the alkali solution is 100°C or lower, a change in concentration of the solution due to the evaporation of water can be suppressed. The temperature of the alkali solution is more preferably 95°C or lower, and still more preferably 90°C or lower. The temperature of the alkali solution is more preferably 75°C or higher, and still more preferably 85°C or higher.

In the present embodiment, a case where the zirconium solution and the sulfating agent solution are brought into contact with each other using the T-shaped tube 20, and the mixed solution is then charged into the alkali solution disposed below will be described. However, an instrument for bringing the zirconium solution and the sulfating agent solution into contact with each other is not limited to the T-shaped tube 20, and a Y-shaped tube connector made of glass, or the like may be used.

In the step 3, the zirconium solution and the sulfating agent solution are brought into contact with each other by controlling the feeding speed of the zirconium solution by the metering solution feeding pump 12 and the feeding speed of the sulfating agent solution by the metering solution feeding pump 32. The mixed solution (basic zirconium sulfate-containing reaction solution) obtained by the contact immediately flows (is charged) into the alkali solution in the container 40 from the lower side of the T-shaped tube 20.

By immediately flowing (dropping) the mixed solution (basic zirconium sulfate-containing reaction solution) obtained by bringing the zirconium solution and the sulfating agent solution into contact with each other into the alkaline solution, the formed basic zirconium sulfate particles (ZBS particles) are instantaneously neutralized and electrically aggregated, and therefore a zirconium hydroxide powder having a pore diameter D₅₀ in a range of 50 nm or more and 1000 nm or less can be obtained.

The phrase "immediately charging the mixed solution into the alkali solution" means that the mixed solution is quickly charged into the alkali solution by setting the feeding speed of the zirconium solution by the metering solution feeding pump 12 and the feeding speed of the sulfating agent solution by the metering solution feeding pump 32 within appropriate ranges.

Specifically, "immediately charging the mixed solution into the alkali solution" means that the feeding speed of the zirconium solution by the metering solution feeding pump 12 is set within a range of 1 mL/min or more and 25 mL/min or less, and the feeding speed of the sulfating agent solution by the metering solution feeding pump 32 is set within a range of 0.2 mL/min or more and 5 mL/min or less, so that the mixed solution (mixed portion) obtained by bringing the zirconium salt solution and the sulfating agent solution after heating into contact with each other is directly charged into the alkali solution.

The feeding speed of the zirconium solution is more preferably 5 mL/min or more, and still more preferably 10 mL/min or more. The feeding speed of the zirconium solution is more preferably 20 mL/min or less, and still more preferably 15 mL/min or less.

The feeding speed of the sulfating agent solution is more preferably 1 mL/min or more, and still more preferably 2 mL/min or more. The feeding speed of the sulfating agent solution is more preferably 4 mL/min or less, and still more preferably 3 mL/min or less.

A tube diameter L1 (see Fig. 1) for feeding the zirconium solution is preferably 1 mm or more and 10 mm or less. The tube diameter L1 is more preferably 2 mm or more, and still more preferably 4 mm or more. The tube diameter L1 is more preferably 8 mm or less, and still more preferably 6 mm or less.

A tube diameter L2 (see Fig. 1) for feeding the sulfating agent solution is preferably 1 mm or more and 10 mm or less. The tube diameter L2 is more preferably 2 mm or more, and still more preferably 4 mm or more. The tube diameter L2 is more preferably 8 mm or less, and still more preferably 6 mm or less.

When the feeding speed of the zirconium solution by the metering solution feeding pump 12, the feeding speed of the sulfating agent solution by the metering solution feeding pump 32, the tube diameter L1, and the tube diameter L2 are within the above several ranges, it is easier to immediately charge the mixed solution into the alkaline solution.

The alkaline solution is not particularly limited as long as the alkaline solution can produce a hydroxide, but it is preferable that the pH is adjusted to 9 or more, and preferably 12.5 or more even after the whole mixed solution is added dropwise.

After the mixed solution is added dropwise to the alkali solution, an alkali solution may be further added.

Then, the mixed solution is preferably washed with pure water or the like to remove impurities, as necessary. After washing with water, drying or the like may be performed, as necessary.

The method for producing the zirconium hydroxide powder according to the present embodiment has been described above.

### EXAMPLES

Hereinafter, the present invention will be described in detail with reference to Examples, but the present invention is not limited to the following Examples as long as the following descriptions do not depart from the gist of the present invention. Zirconium hydroxide powders obtained in Examples and Comparative Examples contain 1 to 3% by mass of hafnium as unavoidable impurities with respect to zirconium (calculated by the following formula (X)). ([Mass of hafnium] / ([mass of zirconium] + [mass of hafnium])) × 100 (%)

The maximum value and minimum value of the content of each component shown in the following Examples should be considered as a preferable minimum value and a preferable maximum value of the present invention regardless of the content of other components.

In addition, the maximum value and the minimum value of the measured values shown in the following Examples should be considered to be the preferred minimum value and maximum value of the present invention regardless of the content (composition) of each component.

### [Zirconium hydroxide powder]

### (Example 1)

100 mL of an aqueous zirconium oxychloride solution (Zr concentration = 1.6 M) and 35 mL of an aqueous sodium sulfate solution (Na₂SO₄ concentration = 1.6 M) were heated to 70°C, and 250 mL of an aqueous sodium hydroxide solution (NaOH concentration = 0.5 mM) was heated to 90°C. Thereafter, two solutions of the aqueous zirconium oxychloride solution and the aqueous sodium sulfate solution were mixed by solution feeding using a metering solution feeding pump, and then the solution obtained by mixing the two solutions was directly fed into an aqueous sodium hydroxide solution heated to 90°C.

At this time, a tygon tube having an inner diameter of 4 mm was used, and a Y-shaped tube connector made of glass was used as a confluent site of two solutions for performing a two-solution mixing reaction. The feeding speed of the aqueous zirconium oxychloride solution was 10 mL/min, and the flow speed of the aqueous sodium sulfate solution was 3.5 mL/min.

The mixture of the respective aqueous solutions was stirred as it was at 90°C for 30 minutes, and an aqueous sodium hydroxide solution (NaOH concentration = 0.1 M) was then added until the pH reached 11 or more, thereby obtaining a slurry containing zirconium hydroxide. Subsequently, the slurry was filtered off, and then washed with distilled water until the amounts of Na and Cl contained in the precipitate became less than 100 ppm, thereby obtaining a cake containing zirconium hydroxide.

The recovered zirconium hydroxide cake was heat-treated at 200°C for 1 hour using a dryer to obtain a zirconium hydroxide powder according to Example 1.

The obtained zirconium hydroxide powder was amorphous. It was confirmed by powder X-ray diffraction measurement that the obtained zirconium hydroxide powder was amorphous. Also in the following Examples 2 to 10 and Comparative Examples 1 to 5, the obtained zirconium hydroxide powder was confirmed to be amorphous by powder X-ray diffraction measurement.

### (Example 2)

A zirconium hydroxide powder according to Example 2 was obtained in the same manner as in Example 1 except that a drying time was changed to 2 hours.

### (Example 3)

A zirconium hydroxide powder according to Example 3 was obtained in the same manner as in Example 1 except that a drying time was changed to 3 hours.

### (Example 4)

A zirconium hydroxide powder according to Example 4 was obtained in the same manner as in Example 1 except that a drying time was changed to 24 hours.

### (Example 5)

A zirconium hydroxide powder according to Example 5 was obtained in the same manner as in Example 1 except that a drying time was changed to 96 hours.

### (Example 6)

A zirconium hydroxide powder according to Example 6 was obtained in the same manner as in Example 1 except that the concentration of an aqueous sodium sulfate solution was 2.2 M.

### (Example 7)

A zirconium hydroxide powder according to Example 7 was obtained in the same manner as in Example 6 except that a drying time was changed to 2 hours.

### (Example 8)

A zirconium hydroxide powder according to Example 8 was obtained in the same manner as in Example 6 except that a drying time was changed to 3 hours.

### (Example 9)

A zirconium hydroxide powder according to Example 9 was obtained in the same manner as in Example 6 except that a drying time was changed to 24 hours.

### (Example 10)

A zirconium hydroxide powder according to Example 10 was obtained in the same manner as in Example 6 except that a drying time was changed to 96 hours.

### (Comparative Example 1)

To 100 mL of an aqueous zirconium oxychloride solution (Zr = 1.0 M), ammonia water was added until the pH reached 8 to obtain a slurry containing zirconium hydroxide. Subsequently, the slurry was filtered off, and then washed with distilled water until the amounts of Na and Cl contained in the precipitate became less than 100 ppm, thereby obtaining a cake containing zirconium hydroxide. 500 mL of distilled water was added to the obtained cake, and the cake was aged at 90°C for 8 hours. After the completion of the aging, the aged product was filtered off. The obtained cake was then heat-treated at 200°C for 1 hour using a dryer to obtain a zirconium hydroxide powder according to Comparative Example 1.

### (Comparative Example 2)

A zirconium hydroxide powder according to Comparative Example 2 was obtained in the same manner as in Comparative Example 1 except that a drying time was changed to 2 hours.

### (Comparative Example 3)

A zirconium hydroxide powder according to Comparative Example 3 was obtained in the same manner as in Comparative Example 1 except that a drying time was changed to 3 hours.

### (Comparative Example 4)

A zirconium hydroxide powder according to Comparative Example 4 was obtained in the same manner as in Comparative Example 1 except that a drying time was changed to 24 hours.

### (Comparative Example 5)

A zirconium hydroxide powder according to Comparative Example 5 was obtained in the same manner as in Comparative Example 1 except that a drying time was changed to 96 hours.

### [Quantitative determination of water content during temperature rise to 195°C and mass ratio after temperature rise to 195°C ([H₂O]/[Zr]]

Thermo Plus TG8120 manufactured by Rigaku Corporation was used to determine a water content was determined from a weight reduction rate from the start of temperature rise to 195°C under the following <TG-DTA measurement conditions>. A ZrO₂ content was quantified from a weight reduction rate from the start of temperature rise to 1000°C.

### <TG-DTA measurement conditions>

sample weight: 20 mg
sample container: platinum pan (ϕ: 5.2 mm, H: 5 mm)
temperature rising rate: 10°C/min
temperature range: 30°C to 1000°C
standard sample: Al₂O₃ powder 20 mg

Next, the obtained water content and ZrO₂ content were used to obtain a mass ratio ([H₂O]/[Zr]) after temperature rise to 195°C according to the following formula. In the formula, 18 is a molecular weight of water, and 123.22 is a molecular weight of ZrO₂. The results are shown in Table 1. [H2O] / [Zr] = ([H2O content] / 18) / ([ZrO2 content] / 123.22)

### [Measurement of pore volume]

The pore distribution of the zirconium hydroxide powder of each of Examples and Comparative Examples was obtained by a mercury intrusion method using a pore distribution measuring device ("Autopore IV9500" manufactured by Micromeritics). The measurement conditions were set as follows.

### <Measurement conditions>

Measuring device: pore distribution measuring device (Autopore IV9500 manufactured by Micromeritics)
Measuring range: 0.0036 to 10.3 um
Number of measurement points: 120 points
Mercury contact angle: 140 degrees
Mercury surface tension: 480 dyne/cm

The obtained pore distribution was used to determine a pore diameter D₅₀ in a range of 10 nm or more and 6000 nm or less and a total pore volume in a range of 10 nm or more and 6000 nm or less. The results are shown in Table 1.

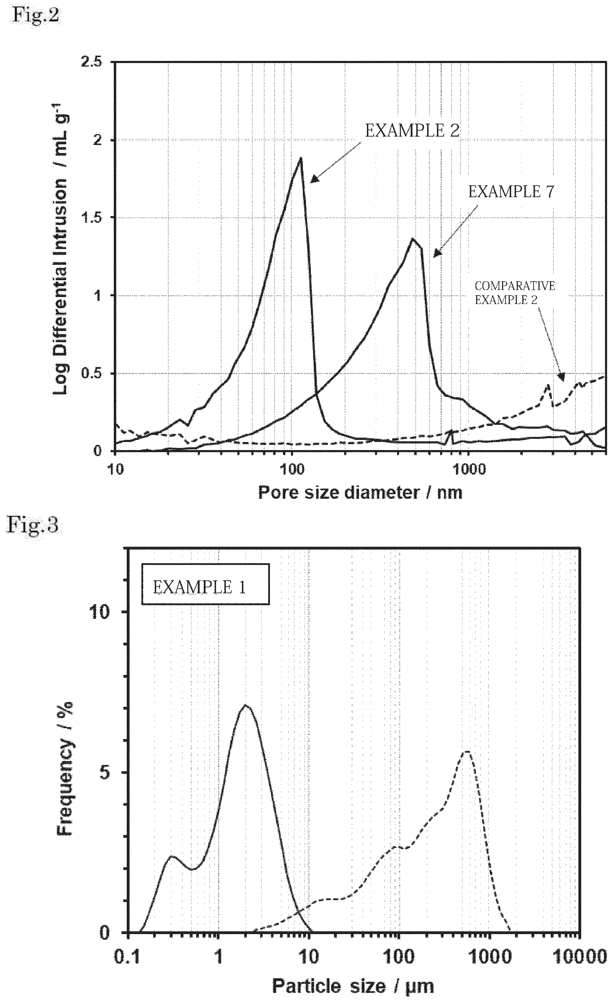

Fig. 2 shows pore distributions of the zirconium hydroxide powders of Example 2, Example 7, and Comparative Example 2. All of these are the zirconium hydroxide powders in which the drying time was set to 2 hours at the time of production.

### [Measurement of bulk density]

The bulk density of each of the zirconium hydroxide powders of Examples and Comparative Examples was determined from the weight of the zirconium hydroxide powder filled in a volume of 30 ml according to JIS K 5101. The results are shown in Table 1.

### [Measurement of specific surface area]

The specific surface area of the zirconium hydroxide powder of each of Examples and Comparative Examples was measured by the BET method using a specific surface area meter ("Macsorb" manufactured by Mountec). The results are shown in Table 1.

### [Measurement of particle diameter D₅₀ (particle diameter D_{50-before}) before crushing treatment, particle diameter D₁₀ (particle diameter D_{10-before}) before crushing treatment, particle diameter D₉₀ (particle diameter D_{90-before}) before crushing treatment, mode diameter before crushing treatment, and average particle diameter before crushing treatment]

0.15 g of the zirconium hydroxide powder of each of Examples and Comparative Examples and 40 ml of a 0.2% sodium hexametaphosphate aqueous solution were placed in a 50-ml beaker, and dispersed in a desktop ultrasonic cleaner "W-113" (manufactured by Honda Electronics Corporation) for 5 minutes, followed by placing the dispersed product in the device (laser diffraction type particle diameter distribution measuring device ("SALD-2300" manufactured by Shimadzu Corporation)) for measurement. The results are shown in Table 2.

### [Measurement of particle diameter D₅₀ after crushing treatment (particle diameter D_{50-after}), particle diameter D₁₀ after crushing treatment (particle diameter D_{10-after}), particle diameter D₉₀ after crushing treatment (particle diameter D_{90-after}), mode diameter after crushing treatment, and average particle diameter after crushing treatment]

The zirconium hydroxide powders of Examples and Comparative Examples were crushed according to the following crushing treatment.

### <Crushing treatment>

0.1 g of the zirconium hydroxide powder is added to 40 mL of pure water, and a homogenizer treatment is performed for 5 minutes under the following <crushing conditions> using an ultrasonic homogenizer, product name Digital Sonifier model 250 manufactured by BRANSON:
<Crushing conditions>
transmission frequency: 20 kHz;
high frequency output: 200 W; and
amplitude control: 40 ± 5%.

0.15 g of the zirconium hydroxide powder subjected to the crushing treatment and 40 ml of a 0.2% aqueous sodium hexametaphosphate solution were placed in a 50-ml beaker, and dispersed in a desktop ultrasonic cleaner "W-113" (manufactured by Honda Electronics Corporation) for 5 minutes, followed by placing the dispersed product in the device (laser diffraction type particle diameter distribution measuring device ("SALD-2300" manufactured by Shimadzu Corporation)) for measurement. The results are shown in Table 2.

A particle size change rate represented by the following formula (1) is also shown in Table 2.[Particle size change rate(%) = 100 - ([particle diameter D50-after] / [particle diameter D50-before]) × 100

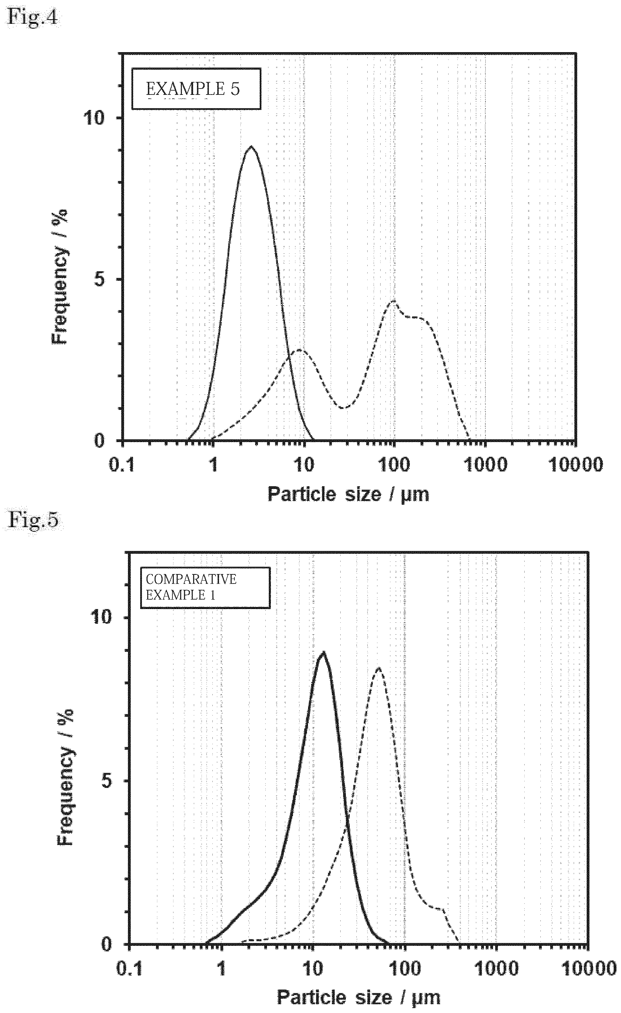

Fig. 3 shows particle diameter distributions before and after crushing of the zirconium hydroxide powder of Example 1. Fig. 4 shows particle diameter distributions before and after crushing of a zirconium hydroxide powder of Example 5. Fig. 5 shows particle diameter distributions before and after crushing of the zirconium hydroxide powder of Comparative Example 1. In Figs. 3, 4, and 5, broken lines represent particle diameter distributions before crushing, and solid lines represent particle diameter distributions after crushing.

As can be seen from Figs. 3 to 5, in the zirconium hydroxide powders according to Examples 1 and 5, the particle diameter distribution after crushing is largely shifted to the left side (low particle diameter side) as a whole, and atomization provided by the crushing treatment is remarkable as compared with the zirconium hydroxide powder according to Comparative Example 1.

### [SEM observation]

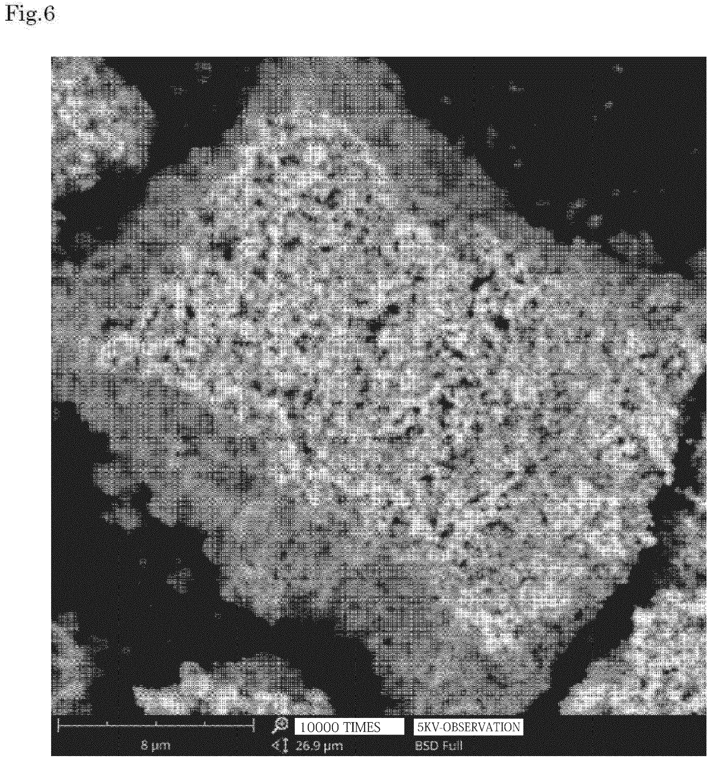

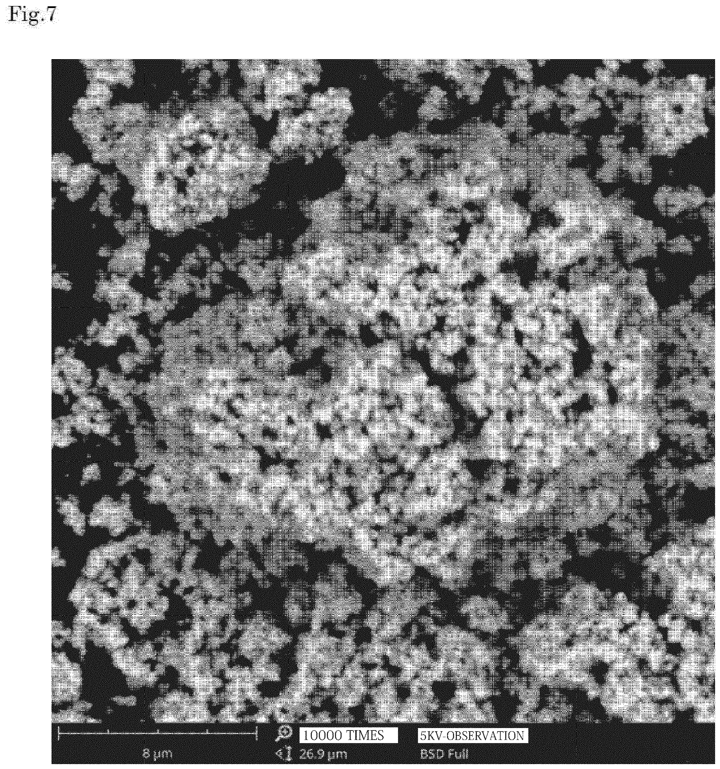

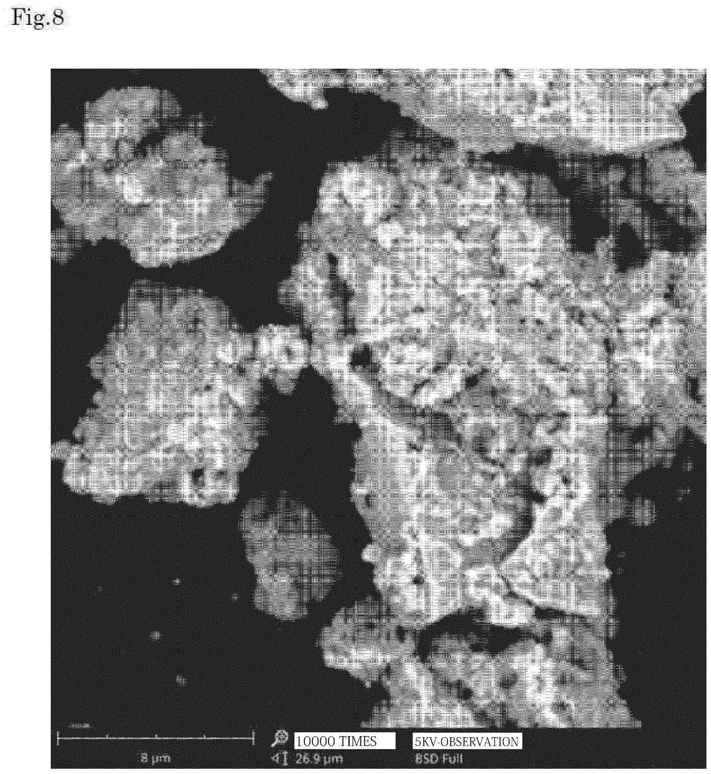

Fig. 6 shows an SEM image of the zirconium hydroxide powder obtained in Example 1, Fig. 7 shows an SEM image of the zirconium hydroxide powder obtained in Example 6, and Fig. 8 shows an SEM image of the zirconium hydroxide powder obtained in Comparative Example 1.

As shown in Figs. 6 and 7, voids on the order of several um could be confirmed in the zirconium hydroxide powders of Examples 1 and 6. Meanwhile, as shown in Fig. 8, in the zirconium hydroxide powder of Comparative Example, voids on the order of several um were not confirmed.

Although not shown, the same SEM image as that of the zirconium hydroxide powder of Example 1 was obtained for the zirconium hydroxide powders of Examples 2 to 5. Although not shown, the same SEM image as that of the zirconium hydroxide powder of Example 6 was obtained for the zirconium hydroxide powders of Examples 7 to 10.

Also, as apparent from these results, the zirconium hydroxide powders of Examples had an aggregate structure including many macropores contributing to crack formation between particles.

**[Table 1]**

| Sample | Water content during temperature rise to 195°C (%) | H₂O/Zr during temperature rise to 195°C (mole ratio) | Pore characteristics | | Bulk density (g/cm³) | Specific surface area (m²/g) | Crystal phase |
|---|---|---|---|---|---|---|---|
| | | | Pore volume (mL/g) | Pore diameter D₅₀ (nm) | | | |
| Example 1 | 5.49 | 0.80 | 0.92 | 110 | 0.31 | 267 | Amorphous |
| Example 2 | 5.24 | 0.76 | 0.91 | 108 | 0.32 | 268 | Amorphous |
| Example 3 | 4.67 | 0.67 | 0.89 | 103 | 0.33 | 270 | Amorphous |
| Example 4 | 3.58 | 0.51 | 0.86 | 94 | 0.36 | 273 | Amorphous |
| Example 5 | 3.23 | 0.46 | 0.85 | 91 | 0.37 | 274 | Amorphous |
| Example 6 | 5.67 | 0.82 | 0.85 | 540 | 0.16 | 256 | Amorphous |
| Example 7 | 5.67 | 0.82 | 0.85 | 540 | 0.16 | 256 | Amorphous |
| Example 8 | 5.54 | 0.80 | 0.85 | 534 | 0.16 | 260 | Amorphous |
| Example 9 | 3.25 | 0.46 | 0.84 | 432 | 0.17 | 325 | Amorphous |
| Example 10 | 2.86 | 0.40 | 0.84 | 415 | 0.17 | 336 | Amorphous |
| Comparative Example 1 | 5.25 | 0.76 | 0.45 | 1500 | 0.70 | 305 | Amorphous |
| Comparative Example 2 | 4.84 | 0.70 | 0.44 | 1482 | 0.73 | 301 | Amorphous |
| Comparative Example 3 | 4.78 | 0.69 | 0.44 | 1479 | 0.74 | 304 | Amorphous |
| Comparative Example 4 | 3.57 | 0.51 | 0.42 | 1426 | 0.83 | 295 | Amorphous |
| Comparative Example 5 | 3.30 | 0.47 | 0.42 | 1414 | 0.85 | 290 | Amorphous |

**[Table 2]**

| Sample | D₅₀ | | | D₁₀ | | D₉₀ | | Mode diameter | | Average particle diameter | |
|---|---|---|---|---|---|---|---|---|---|---|---|
| | Before crushing treatment (µm) | After crushing treatment (µm) | Particle size change rate before and after crushing (%) | Before crushing treatment (µm) | After crushing treatment (µm) | Before crushing treatment (µm) | After crushing treatment (µm) | Before crushing treatment (um) | After crushing treatment (µm) | Before crushing treatment (µm) | After crushing treatment (µm) |
| Example 1 | 225.7 | 1.6 | 99.3 | 20.9 | 0.3 | 710.5 | 4.4 | 550.0 | 2.1 | 308.5 | 2.0 |
| Example 2 | 285.5 | 2.2 | 99.2 | 34.8 | 0.6 | 699.8 | 5.4 | 423.5 | 2.4 | 334.0 | 2.7 |
| Example 3 | 227.8 | 2.5 | 98.9 | 26.5 | 0.8 | 636.0 | 5.9 | 423.5 | 3.2 | 287.7 | 3.0 |
| Example 4 | 261.1 | 2.7 | 99.0 | 33.0 | 0.8 | 770.0 | 6.6 | 482.7 | 3.2 | 343.7 | 3.3 |
| Example 5 | 238.2 | 2.9 | 98.8 | 40.1 | 0.8 | 670.9 | 7.2 | 422.4 | 3.6 | 308.1 | 3.5 |
| Example 6 | 65.1 | 2.5 | 96.2 | 4.5 | 1.2 | 263.2 | 5.2 | 94.4 | 2.4 | 100.4 | 2.9 |
| Example 7 | 109.3 | 2.7 | 97.5 | 4.0 | 1.3 | 540.4 | 5.4 | 480.0 | 2.8 | 197.0 | 3.1 |
| Example 8 | 212.9 | 2.5 | 98.8 | 5.5 | 1.2 | 592.4 | 5.3 | 480.6 | 2.8 | 265.2 | 2.9 |
| Example 9 | 202.5 | 2.5 | 98.8 | 4.7 | 1.0 | 678.8 | 5.4 | 484.2 | 2.8 | 283.6 | 2.9 |
| Example 10 | 117.5 | 2.5 | 97.9 | 3.6 | 1.0 | 587.3 | 5.7 | 163.4 | 2.8 | 211.1 | 3.0 |
| Comparative Example 1 | 44.17 | 10.0 | 77.4 | 14.5 | 2.6 | 106.7 | 21.4 | 48.1 | 12.4 | 56.5 | 11.3 |
| Comparative Example 2 | 42.14 | 10.2 | 75.9 | 12.7 | 2.6 | 86.2 | 21.7 | 48.2 | 12.4 | 47.8 | 11.5 |
| Comparative Example 3 | 42.84 | 10.1 | 76.3 | 14.2 | 2.7 | 99.9 | 21.7 | 48.0 | 12.4 | 53.6 | 11.5 |
| Comparative Example 4 | 39.02 | 10.2 | 73.9 | 12.6 | 2.7 | 83.6 | 21.6 | 47.9 | 12.4 | 45.8 | 11.5 |
| Comparative Example 5 | 44.26 | 11.2 | 74.8 | 14.3 | 3.3 | 188.2 | 23.7 | 47.9 | 12.4 | 76.3 | 12.7 |

## Claims

1. A zirconium hydroxide powder, wherein in a pore diameter distribution determined by a mercury intrusion method, a pore diameter D₅₀ in a range of 10 nm or more and 6000 nm or less is 50 nm or more and 1000 nm or less.

2. The zirconium hydroxide powder according to claim 1, wherein a total pore volume in a range of 10 nm or more and 6000 nm or less determined by the mercury intrusion method is 0.5 mL/g or more and 1.5 mL/g or less.

3. The zirconium hydroxide powder according to claim 1 or 2, wherein a material amount ratio of H₂O to Zr ([H₂O]/[Zr]) excluding physically adsorbed water is 0.2 or more and 1.0 or less.

4. The zirconium hydroxide powder according to any one of claims 1 to 3, wherein the zirconium hydroxide powder has a bulk density of 0.05 g/cm³ or more and 1 g/cm³ or less.

5. The zirconium hydroxide powder according to any one of claims 1 to 4, wherein when a particle diameter D₅₀ after the following crushing treatment is defined as a particle diameter D_{50-after}, and a particle diameter D₅₀ before the crushing treatment is defined as a particle diameter D_{50-before}, a particle size change rate represented by the following formula (1) is 80% or more:[Particle size change rate(%) = 100 - ([particle diameter D50-after] / [particle diameter D50-before]) × 100
<Crushing treatment>
0.1 g of the zirconium hydroxide powder is charged into 40 mL of pure water, and subjected to a homogenizer treatment for 5 minutes under the following crushing conditions using an ultrasonic homogenizer manufactured by BRANSON: product name Digital Sonifier 250 type:
<Crushing conditions>
transmission frequency: 20 kHz;
high frequency output: 200 W; and
amplitude control: 40 ± 5%.

6. The zirconium hydroxide powder according to claim 5, wherein the particle diameter D_{50-before} is 50 um or more and 300 um or less.

7. The zirconium hydroxide powder according to claim 5 or 6, wherein the particle diameter D_{50-after} is 0.05 um or more and 9 um or less.

8. The zirconium hydroxide powder according to any one of claims 1 to 7, wherein the zirconium hydroxide powder has a specific surface area of 200 m²/g or more and 450 m²/g or less.
